# EUROPÄISCHE PATENTSCHRIFT

(11) **EP 0 388 736 B1**
(45) Veröffentlichungstag und Bekanntmachung des Hinweises auf die Patenterteilung: **21.09.1994**
(21) Anmeldenummer: 90104534.4
(22) Anmeldetag: 09.03.1990
(51) Int. Cl.: G01F 1/05

(54) **Flügelradzähler**
Impeller flow meter
Compteur à turbine

(30) Priorität: 23.03.1989 DE 3909722
(43) Veröffentlichungstag der Anmeldung: 26.09.1990
(73) Patentinhaber: Hydrometer Gesellschaft mbH, D-91522 Ansbach (DE)
(72) Erfinder: Lacher Ewald, Dipl.-Ing., D-8800 Ansbach (DE); Ibel, Karl-Heinz, D-8800 Ansbach (DE)
(74) Vertreter: Baronetzky, Klaus, Dipl.-Ing.

(56) Entgegenhaltungen:
- DE-A- 2 830 517
- GB-A- 16 765
- US-A- 4 512 201

## Beschreibung

Die Erfindung betrifft einen Flügelradzähler gemäß dem Oberbegriff von Anspruch 1.

Ein derartiger bekannter Flügelradzähler wie z.B. aus US-A- 4 512 201 zu erkennen ist, weist einen Meßbecher auf, in welchem ein Flügelrad gelagert ist, das mit dem als Trockenläufer ausgebildeten Zählwerk drehfest verbunden ist. Hierbei bilden Meßbecher, Flügelrad und Zählwerk eine Einheit und können separat ausgetauscht und geeicht werden, auch wenn das Meßwerksgehäuse mit den Anschlüssen für das zu messende Fluid in der Wand verbleibt.

Bei den Wasserzählern haben sich derartige Flügelradzähler als sog. Einrohrzähler durchgesetzt. Sie bieten zum einen den Vorteil, daß die Einheit als selbständig eichfähige Patrone ausgewechselt und nachgeeicht werden kann, ohne daß Maurerarbeiten anfallen würden, da das Gehäuse samt den Wasserleitungsanschlüssen in der Wand verbleiben kann.

DE-30 156 87 zeigt ein Fluid Meßvorrichtung mit einem separaten Einsatz der eine schräg nach oben erstreckende Anstromfläche aufweist.

In bestimmten Anwendungsfällen soll ein und derselbe Zähler nach Möglichkeit für eine gewisse Bandbreite von Rohr-Verlegungstiefen verwendet werden, also sowohl für knapp unter der Wandoberfläche oder außerhalb der Wandoberfläche verlegte Wasserrohre als auch für etwas tiefer verlegte Wasserrohre.

Hierzu ist es bekannt (z.B. aus DE 2 836 484), einen Tiefenausgleich dergestalt herbeizuführen, daß mit einem Einlaß und Auslaß trennenden T-förmigen Einsatz auch große Verlegungstiefen überbrückt werden können. Hierzu wird ein Anschlußrohr, in dem der Einsatz und damit der Einlaß- und der Auslaßkanal nebeneinander geführt sind, in unterschiedlichen, genormten Baulängen vorbereitet und ggf. vor Ort auf die gewünschte Länge gekürzt.

Diese Lösung ist jedoch vergleichsweise aufwendig, vor allem, was die Lagerhaltung der unterschiedlichen Anschlußstücke angeht. Zudem kann es in manchen Anwendungsfällen wünschenswert sein, eine tangential-radiale Anströmung des Flügelrads anstelle der axialen Anströmung zu verwenden. Bei der bekannten Flügelradzähler-Konstruktion wird zudem das Flügelrad nicht gerade gleichmäßig beaufschlagt, was zu einer erhöhten Lagerbelastung führt.

Ein weiteres, insbesondere bei Flügelradzählern auftretendes Problem ist die Ablagerung von Kalk- und sonstigen Verschmutzungen, die nicht nur die hydrodynamischen Verhältnisse beeinflußt, sondern vor allem das Austauschen der Einheit erschwert, die bei der üblichen Ausgestaltung dazu neigt, an der Trennfuge zwischen Einsatz und Einheit festzubacken, so daß eine zerstörungsfreie Trennung nur schwer möglich ist.

Demgegenüber ist es Aufgabe der Erfindung, einen kostengünstigen, hydrodynamisch verbesserten Flügelradzähler gemäß dem Oberbegriff von Anspruch 1 zu schaffen, der konstruktionsbedingt weniger zum Festbacken aufgrund von Kalk- oder weiteren Ablagerungen neigt und der dennoch für hohe Durchsätze auch bei mitteltief versenkt eingebauten Wasserrohren geeignet ist.

Diese Aufgabe wird erfindungegemäß durch Anspruch 1 gelöst. Vorteilhafte Weiterbildungen ergeben sich aus den Unteransprüchen.

Durch die schräge Anordnung der Anströmfläche für das Flügelrad, die an dem Einsatz vorgesehen ist, wird zunächst erreicht, daß der Einlaß in das Gehäuse des Flügelradzählers tiefer liegen kann als das Flügelrad selbst. Bereits durch diese Maßnahme läßt sich die prinzipielle Neigung zur Verkalkung vermindern, wobei zugleich die Lagerhaltung günstig beeinflußt werden kann, denn es ist lediglich eine Bauart des Gehäuses und des Einsatzes erforderlich. Hydrodynamisch besonders günstig ist die erfindungsgemäße Anordnung der Anströmfläche an den Meßbecher, die dem Flügelrad zugewandt ist, denn hierdurch wird die Möglichkeit bereitgestellt, das Flügelrad teils direkt, teils praktisch umlenkungsfrei schräg und teils über eine bogenförmige Umlenkung der am Einlaß eintretenden Wasserströmung zu beaufschlagen. Gegenüber den bislang vorgesehenen, nahezu rechtwinkligen Umlenkungen wird dadurch die Neigung zu Sekundärwirbeln erheblich vermindert, was die Fehlertoleranz des Flügelradzählers verbessert.

Trotz der konischen Ausbildung des Meßbechers lassen sich in diesem Staurippen anbringen, die in an sich bekannter Weise der Linearisierung dienen. Auch wird die Möglichkeit der Rückwärtszählung nicht beeinträchtigt, da ohne weiteres in dem Bodenbereich des Meßbechers, der einen axial zu dem Flügelrad angeordneten Teil des Auslaßkanals bildet, schrägstehende Rippen vorgesehen sein können, so daß bei Rückwärtsströmung des Wassers eine Rückwärtsdrehung des Flügelrads auftritt.

Durch die bogenförmig um den Meßbecher herum geführte Strömung im Anströmkanal lassen sich verschiedene Vorteile erreichen: Zum einen werden die Lagerkräfte gering gehalten, da das Flügelrad an seinem Umfang etwa gleichmäßig beaufschlagt wird. Hierzu ergibt sich durch die Schrägstellung der Anströmfläche automatisch eine Verjüngung des Anströmkanals, so daß dieser auch noch in den hintersten Bereichen mit einem entsprechenden Druck beaufschlagt ist. Die Umlenkung erzeugt zudem offenbar eine Art Mikroverwirbelung, die dazu beiträgt, die Bildung von Ablagerungen zu verhindern. Besonders günstig ist es hierbei, daß nur ein kleiner, flacher und ringförmiger Berührungsbereich zwischen dem Einsatz und der auswechselbaren Einheit besteht, wobei die Berührungsfläche sich senkrecht zur Entnahmerichtung erstreckt, so daß bereits aus diesem Grunde die Neigung des Meßbechers zum Festsetzen vermindert ist.

Hierzu ist es besonders günstig, wenn die Berührungsfläche über eine Dichtung in Form eines O-Rings gebildet ist, der sich längs der Anströmfläche an deren Innenkante erstreckt und die Abströmöffnung aus dem Meßbecher heraus umgibt. Eine derartige Ausgestaltung bietet zugleich den Vorteil, daß die Strömungsquerschnitte vergleichsweise groß gehalten sein können und zudem ziemlich umlenkungsarm und im Bereich der Umlenkung mit vergleichsweise großen Radien verlaufen können, was im Hinblick auf den Druckabfall vorteilhaft ist.

Besonders günstig ist es, wenn gemäß einer vorteilhaften Ausgestaltung der Erfindung die Anströmfläche sich schräg bogenförmig in Drehrichtung des Flügelrads, nahzu um dessen gesamten Umfang, erstreckt. In diesem Falle wird die Möglichkeit eröffnet, das Flügelrad aufgrund des in Drehrichtung abnehmenden Anströmkanalquerschnitts gleichmäßig zu beaufschlagen. Ferner kann der Anströmkanal ohne weiteres hydrodynamisch angepaßt sein, so daß die Wirbelverluste minimiert sind. Hierzu ist es günstig, dem Anströmkanal nahe des Außenumfangs des Einsatzes eine dem Meßbecher zugewandte Abschrägung zu geben, so daß der Anströmkanal in seinem hinteren Bereich einen im wesentlichen flachen Querschnitt mit einer an den Meßbecherkonus angepaßten schrägen Ausrichtung aufweist.

In diesem Zusammenhang hat es sich ferner als günstig herausgestellt, wenn die Anströmöffnungen für das Flügelrad in dem Meßbecher horizontal gerade herausgearbeitet sind, wobei aufgrund der konusförmigen Ausbildung der Meßbecherwandung die Anströmöffnungen dennoch außen einen vertikal schrägen Eintrittsquerschnitt aufweisen.

Günstigerweise zeigt hierbei die Achse jeder Anströmöffnung etwa auf die Mitte des sich je an dieser vorbeibewegenden Flügels des Flügelrads, so daß die Achsen der Anströmöffnungen sich tangential mit radialer Komponente, und eigentlich auch leicht axialer Komponente, zum Flügelrad erstrecken.

Die Anströmfläche des Einsatzes kann in zwei Bereiche aufgeteilt sein, von denen sich lediglich der erste, dem Einlaß benachbarte Bereich schräg nach oben erstreckt, während der zweite Bereich nahezu horizontal verläuft. Hierdurch wird ein strömungstechnisch günstiges Verhalten des erfindungsgemäßen Flügelradzählers innerhalb eines vergleichsweise großen Linearitätsbereichs erzeugt.

Besonders günstig ist es vor allem, daß mit der erfindungsgemäßen Ausbildung des Flügelradzählers die Verschmutzungsempfindlichkeit gegenüber Ablagerungen wie Kalk und sonstigen Verunreinigungen stark herabgesetzt ist. Mit der Ausbildung des Einsatzes aus einem Kalkablagerungen nicht begünstigenden Kunststoff ist zunächst die Gefahr vermindert, daß sich die Strömungsquerschnitte zu stark verjüngen. Aufgrund der konusförmigen Ausbildungen des Meßbechers in Verbindung mit dem Einsatz wird dann aber das Abbrechen des Meßbechers beim Austausch aufgrund etwaiger Kalkablagerungen prinzipiell verhindert.

Es ist ferner ohne weiteres möglich, gemäß einer weiteren vorteilhaften Weiterbildung ein Filtersieb über den konusförmigen Meßbecher zu stülpen, das an der Dichtung zwischen der Stirnfläche des Meßbechers und dem Einsatz befestigt sein kann. Durch diese Ausbildung wird dann das Filtersieb mit dem Austausch der Einheit stets ausgetauscht.

Eine Unterlegscheibe an dem Schraubanschluß der Einheit gegenüber dem Gehäuse ermöglicht nicht nur die Einstellung des Anpreßdrucks zwischen der Einheit und dem Einsatz, sondern stellt zugleich auch die leichtere Lösbarkeit der Einheit von dem Gehäuse sicher. Zweckmäßigerweise ist diese Kunststoffscheibe außerhalb einer entsprechenden, an sich bekannten Dichtung angeordnet.

Gemäß einer weiteren vorteilhaften Ausgestaltung der Erfindung ist es vorgesehen, daß, wenn die Anströmfläche des Einsatzes sich in einem ersten Bereich schräg nach oben zum Meßbecher erstreckt und in einem zweiten Bereich im wesentlichen waagerecht verläuft, ein hydrodynamisch ausgebildeter Übergang zwischen dem ersten und dem zweiten Bereich vorgesehen ist.

Gemäß einer weiteren vorteilhaften Ausgestaltung der Erfindung ist es vorgesehen, daß der Einsatz eine sich an den zweiten Bereich der Anströmfläche anschließende, äußere Schrägfläche aufweist, die einen sich teilweise um den Umfang des Einsatzes erstreckenden Innenkonus bildet und deren Abwinklung vorzugsweise an eine konische Ausbildung einer Wandung des Meßbechers angepaßt ist.

Gemäß einer weiteren vorteilhaften Ausgestaltung der Erfindung ist es vorgesehen, daß der Einsatz aus einem die Ablagerung von Verunreinigungen wie Kalk abweisenden, formstabilen Kunststoff ausgebildet ist.

Gemäß einer weiteren vorteilhaften Ausgestaltung der Erfindung ist es vorgesehen, daß ein insbesondere an eine Dichtung zwischen der Stirnfläche des Meßbechers und dem Einsatz angeformtes Filtersieb an die Wandung des Meßbechers angepaßt ist und Anströmöffnungen in der Wandung abdeckt und mit der Einheit mechanisch verbunden ist.

Gemäß einer weiteren vorteilhaften Ausgestaltung der Erfindung ist es vorgesehen, daß die Einheit über einen an sich bekannten Schraubanschluß mit dem Gehäuse verbunden ist, wobei eine Unterlegscheibe aus einem elastischen Material wie Kunststoff in der Trennfuge angeordnet ist, über die die Stärke des Anpreßdrucks der Einheit gegenüber dem Einsatz einstellbar ist.

Weitere Vorteile, Merkmale und Einzelheiten der Erfindung ergeben sich aus der nachfolgenden Beschreibung eines Ausführungsbeispiels anhand der Zeichnung.

Es zeigen:
- Fig. 1: eine teilweise geschnittene Ansicht einer Einheit zu einem erfindungsgemäßen Flügelradzähler in einer Ausführungsform;
- Fig. 2: die Einheit gemäß Fig. 1 in einer abgewandelten Ausführungsform;
- Fig. 3: einen Schnitt durch einen Einsatz für den erfindungsgemäßen Flügelradzähler;
- Fig. 4: einen Schnitt durch ein Gehäuse eines erfindungsgemäßen Flügelradzählers; und
- Fig. 5: eine teilweise aufgebrochene Schnittansicht eines erfindungsgemäßen Flügelradzählers 10 in montiertem Zustand.

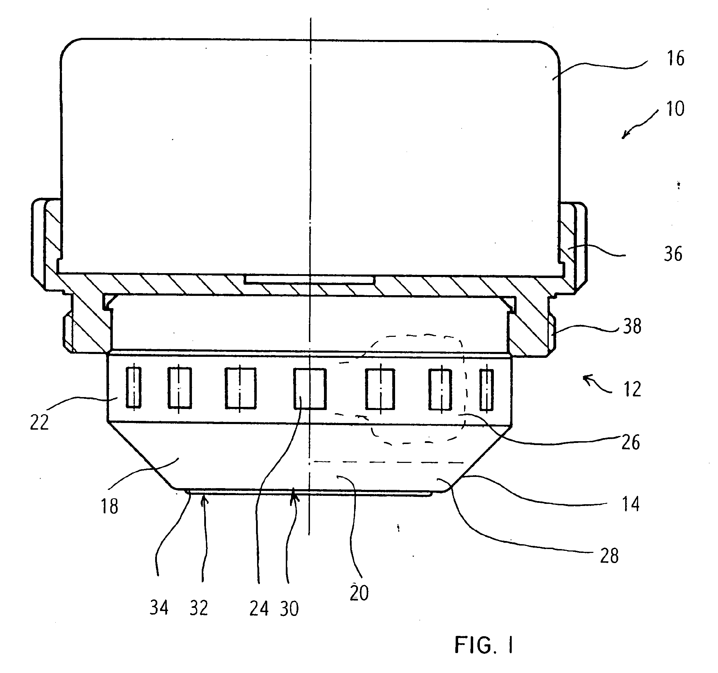

Ein in Fig. 1 dargestellter Flügelradzähler 10 weist eine Einheit 12 auf, die in ein in Fig. 1 nicht dargestelltes Gehäuse einschraubbar ist und aus einem Meßbecher 14 und einem Zählwerk 16 besteht, wobei das Zählwerk 16 in an sich bekannter Weise in Trockenläuferbauart gehalten ist. Selbstverständlich ist es möglich, das Zählwerk 16 in Naßläuferbauart zu verwenden.

Der Meßbecher 14 weist eine Wandung 18 auf, die in dem dargestellten Ausführungsbeispiel aus einem konischen Abschnitt 20 und einem zylindrischen Abschnitt 22 besteht, wobei der konische Abschnitt 20 sich unten an den zylindrischen Abschnitt 22 anschließt.

In dem Ausführungsbeispiel gemäß Fig. 1 sind Anströmöffnungen 24 in dem zylindrischen Abschnitt 22 vorgesehen, die, wie bei Mehrstrahlzählern üblich, schräg auf ein gestrichelt angedeutetes Flügelrad 26 zu verlaufen.

Das Flügelrad 26 ist in dem Meßbecher 14 gelagert und bewegt sich oberhalb von Staurippen, von denen eine Staurippe 28 ebenfalls gestrichelt angedeutet ist.

Die Abströmung erfolgt im wesentlichen koaxial zu dem Flügelrad nach unten durch eine Auslaßöffnung 30 in dem Meßbecher. Die Auslaßöffnung 30 ist mit schräggestellten Rippen versehen, so daß bei Rückströmung des zu messenden Fluids durch die Auslaßöffnung 30 die durch die schrägstehenen Rippen erzeugte Strömung das Flügelrad 26 erfaßt und dieses rückwärts dreht.

Der Meßbecher 14 weist eine nach unten weisende Stirnfläche 32 auf, die mit einem Vorsprung 34 versehen ist, in den eine Nut für die Aufnahme eines nicht dargestellten Dichtungsringes eingelassen ist. Der Dichtungsring und der Vorsprung 34 umgeben die Auslaßöffnung 30.

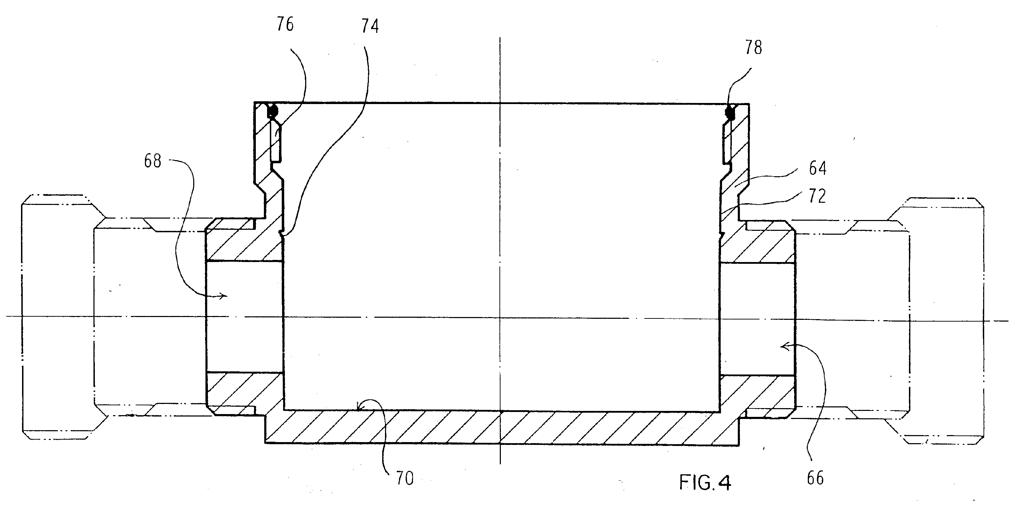

Die Verbindung zwischen dem Zählwerk 16 und dem Meßbecher 14 wird durch einen druckdichten Messingkörper 36 hergestellt, der an seinem Umfang ein Außengewinde 38 aufweist, das in ein Innengewinde an dem Gehäuse gemäß Fig. 4 eingreift. Die Drehbewegung des Flügelrads wird in an sich bekannter Weise über magnetische Mittel zum Zählwerk 16 übertragen.

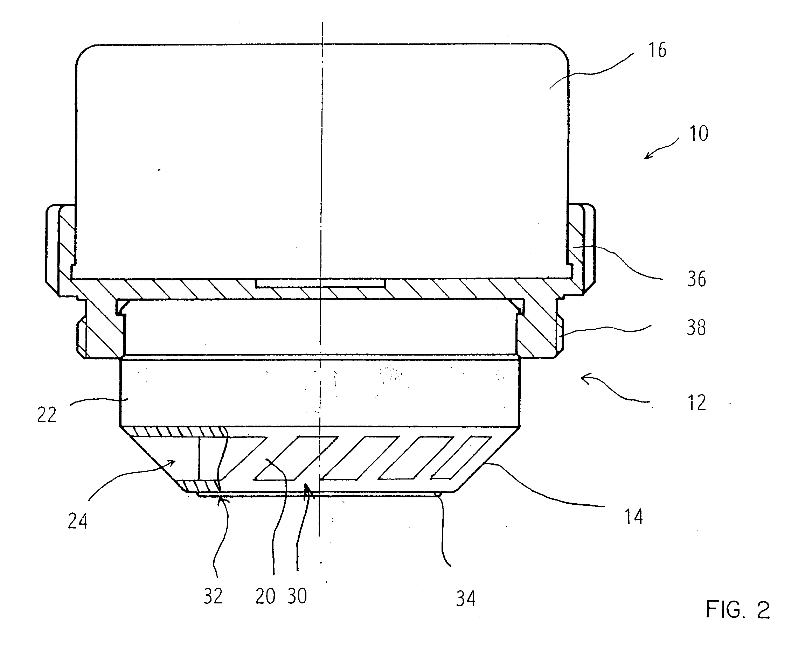

Die Ausführungsform gemäß Fig. 2 unterscheidet sich von der in Fig. 1 dargestellten Ausführungsform der Einheit 12 durch die Anordnung der Anströmöffnungen 24 für das Flügelrad 26. Hier sind die Anströmöffnungen 24 in dem konischen Abschnitt 20 der Wandung 18 des Meßbechers 14 vorgesehen, während der zylindrische Abschnitt 22 vollflächig ausgebildet ist. Wie aus dem teilweise aufgebrochenen konischen Abschnitt 20 ersichtlich ist, erstrecken sich die Anströmöffnungen 24 horizontal, wobei der Einlaßquerschnitt jeder Anströmöffnung 24 jedoch durch eine in der Draufsicht parallelogrammförmige Fläche gebildet ist, da der konische Abschnitt 20 jede Anströmöffnung 24 schneidet und diese sich je in ihren Achsen schräg auf das Flügelrad 26 zu erstrecken. Diese Ausbildung hat sich als hydrodynamisch besonders günstig herausgestellt.

Ferner unterscheidet sich die Ausführungsform gemäß Fig. 2 dadurch, daß Staurippen 28 in verkleinerter Ausbildung vorgesehen sind und in einer weiteren Abwandlung ganz entfallen.

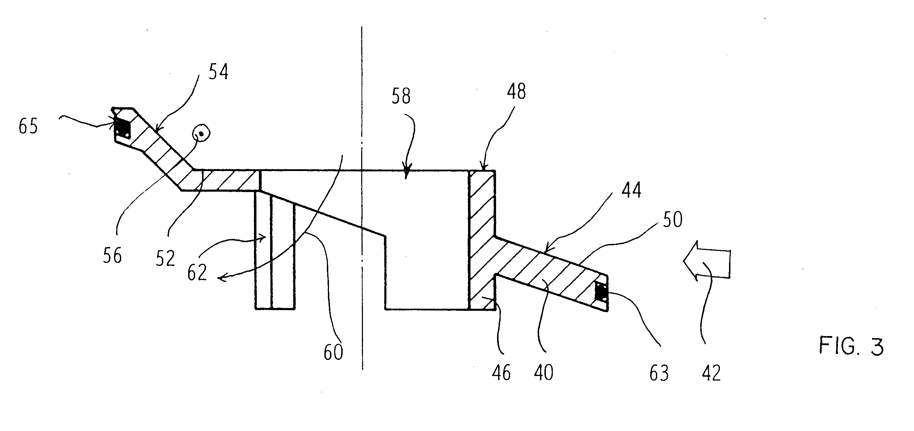

An den Meßbecher 14 gemäß Fig. 1 und 2 schließt sich nach unten ein Einsatz 40 an, der in Fig. 3 im Schnitt dargestellt ist. Die Strömungsrichtung des Wassers ist mit dem Pfeil 42 angedeutet. Der Einsatz weist insbesondere eine schräge Anströmfläche 44 auf, die sich im wesentlichen kreisbogenförmig um einen Mittelabschnitt 46 erstreckt und in ihrer Abwinklung an den konischen Abschnitt 20 des Meßbechers 14 angepaßt ist. Die Anströmfläche 44 erstreckt sich zunächst horizontal schräg nach oben auf den Meßbecher zu, bis das Niveau einer Abschlußfläche 48 erreicht ist. Dieser Bereich der Anströmfläche 44 ist als erster Bereich 50 bezeichnet. Anschließend an den ersten Bereich 50 erstreckt sich im weiteren Bogenverlauf ein zweiter Bereich 52 der Anströmfläche 44, der im wesentlichen horizontal verläuft. Vorzugsweise der zweite Bereich 52, gewünschtenfalls auch der erste Bereich 50, weist eine in Flügelrad-Drehrichtung größer werdende äußere Schrägfläche 54 auf, die sich am Außenumfang an einen horizontalen Teil des zweiten Bereichs 52 anschließt und dem oberhalb des Einsatzes 40 angeordneten Meßbecher 14, der in Fig. 1 und 2 dargestellt ist, zugewandt ist, wie auch in ihrer Abschrägung an den konischen Abschnitt 20 des Meßbechers 14 angepaßt ist.

Der im wesentlichen ringförmig-spiralige Bereich zwischen dem Einsatz 40 bzw. der Anströmfläche 44 und dem Meßbecher 14 ist als Anströmkanal 56 bezeichnet. Wie sich aus dem Vergleich der Figuren 1, 2 und 3 ergibt, nimmt der Querschnitt des Anströmkanals 56, beginnend bei dem Pfeil 42, um den Umfang des Meßbechers 14 ab. Dies führt zu der gewünschten gleichmäßigen Beaufschlagung des Flügelrads 26 um seinen Umfang, wobei der Anströmkanal 56 in einer ersten Ausgestaltung aufgrund der Ausbildung des Einsatzes 40 an seinem Abschluß offengelassen ist und hierdurch bei 42 wieder mündet, während in einer weiteren Ausgestaltung der Einsatz 40 mit der äußeren Schrägfläche 54 am Ende des Anströmkanals 56 nahezu abdichtend an dem Meßbecher 14 anliegt, so daß der Anströmkanal 56 an seinem Ende abgeschlossen ist.

Wie aus Fig. 3 ersichtlich ist, weist der Einsatz 40 innerhalb des Mittelabschnitts 46 eine ziemlich große kreisförmige Öffnung 58 auf, die sich an die Auslaßöffnung 30 des Meßbechers 14 gemäß Fig. 1 bzw. 2 anschließt und den ersten Teil eines Auslaßkanals 60 bereitstellt. Der Mittelabschnitt 46 weist dementsprechend eine Ausnehmung 62 auf, durch welche sich der Auslaßkanal 60 im weiteren Verlauf in horizontaler Richtung erstreckt, so daß die Umlenkung des aus dem Meßbecher 14 vertikal austretenden Wasserstromes im Auslaßkanal 60 zwischen der Öffnung 58 und der Ausnehmung 62 mit einem vergleichsweise großen Strömungsquerschnitt erfolgen kann, und der Strömungswiderstand des erfindungsgemäßen Flügelradzählers vergleichsweise gering ist.

Am Umfang des Einsatzes 40 ist eine umlaufende Dichtung 63 vorgesehen, die in einer entsprechend ausgebildeten Nut 65 gehalten ist und den Anströmkanal 56 gegen den Auslaßkanal 60 abdichtet.

In der Darstellung gemäß Fig. 4 ist ein Gehäuse 64 ersichtlich, das für die Aufnahme des Einsatzes 40 und der Einheit 12 dient. Das Gehäuse 64 weist einen Einlaß 66 und einen Auslaß 68 auf, zwischen welchen der Einsatz 40 aufgenommen ist, so daß die Anströmfläche 44 unmittelbar anschließend an den Einlaß 66 angebracht ist und der Auslaßkanal 60 sich durch den Auslaß 68 hindurch erstreckt.

Wie in Fig. 4 gestrichelt angedeutet ist, können verschiedene Norm-Gewindeanschlüsse je an dem Einlaß 66 bzw. an dem Auslaß 68 vorgesehen sein, um unterschiedlichen Installationserfordernissen Rechnung tragen zu können.

Das Gehäuse 64 weist einen Boden 70 auf, auf welchem der Einsatz 40 voll aufliegt. An den Boden 70 schließt sich ein zylindrischer Abschnitt 72 des Gehäuses 64 an, der in seinen Innenabmessungen den Außenabmessungen des Einsatzes 40 wie auch der Einheit 12 entspricht. Dementsprechend liegt die Dichtung 63 umlaufend innen an dem zylindrischen Abschnitt 72 an, wobei zur zusätzlichen Stabilisierung des Einsatzes 40 eine kleine Nut 74 in der Innenfläche des zylindrischen Abschnittes 72 eingefräst sein kann und zusätzlich eine beliebig ausgebildete Verdrehsicherung für den Einsatz 40 vorgesehen sein kann.

Gewünschtenfalls kann auch die Verdrehsicherung entfallen oder durch ein Festklemmen aufgrund der Dichtwirkung der Dichtung 63 ersetzt sein, oder es können zwei Stellungen für die Verdrehsicherung vorgesehen sein, wobei durch diese Maßnahmen die Möglichkeit eingeräumt sein kann, mit einfachen Mitteln lediglich durch Drehen des Einsatzes um 180° ohne Ausbau des Gehäuses 64 aus einer bestehenden Installationsleitung die Meßrichtung des erfindungsgemäßen Flügelradzählers 10 umzukehren.

Der zylindrische Abschnitt 72 weist ferner ein Innengewinde 76 auf, das an das Außengewinde 38 der Einheit 12 angepaßt ist. In an sich bekannter Weise ist der Messingkörper 36 gegen das Gehäuse 64 über einen Dichtungsring 78, der oberhalb des Innengewindes 76 vorgesehen ist, abgedichtet.

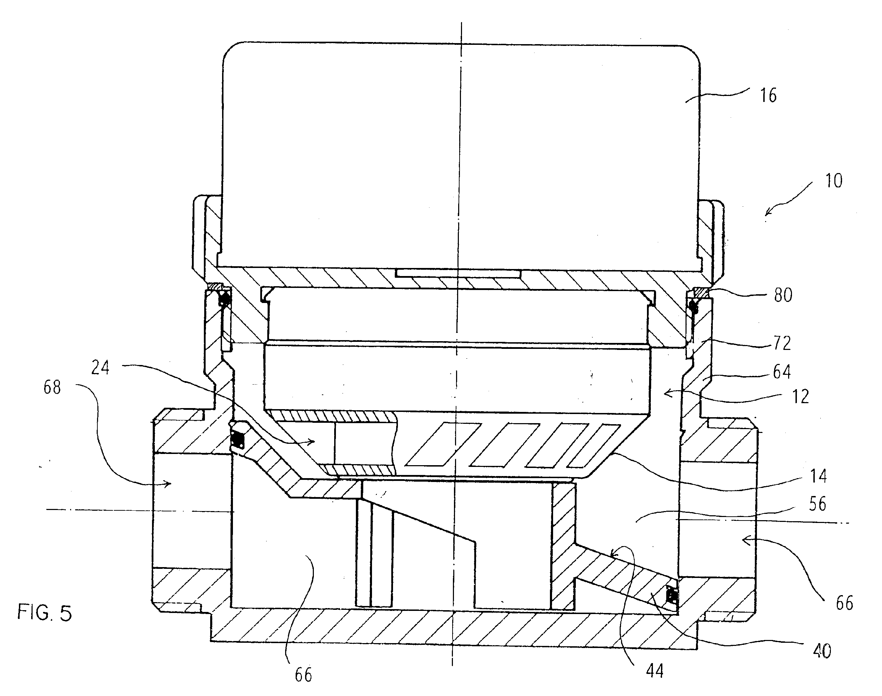

In Fig. 5 ist der erfindungsgemäße Flügelradzähler in zusammengebautem Zustand, teilweise geschnitten und teilweise aufgebrochen, dargestellt. Hier weisen gleiche Bezugszeichen auf gleiche oder entsprechende Teile wie in den zuvor beschriebenen Figuren hin und bedürfen daher keiner weiteren Erläuterung.

Zwischen dem Messingkörper 36 und dem zylindrischen Abschnitt 72 des Gehäuses 64 ist eine Unterlegscheibe 80 vorgesehen, über die sich die zuvor erläuterten Vorteile erzielen lassen. Ferner ist aus Fig. 5 ersichtlich, daß, im Verhältnis zu den geringen Gehäuseabmessungen, vergleichsweise große Strömungsquerschnitte, sowohl für den Anströmkanal 56 als auch für den Auslaßkanal 60, bereitgestellt werden können. Die konische Ausbildung des Meßbechers 14 erlaubt ein einfaches Abschrauben der Einheit 12, auch wenn sich Verkalkungen angesammelt haben, so daß mit den erfindungsgemäßen Maßnahmen auch ein leichtes Austauschen der Einheit 12 möglich ist.

## Patentansprüche

1. Flügelradzähler, mit einem Gehäuse (64), in dem ein Einlaß (66) und ein Auslaß (68) ausgebildet ist, mit einem von dem Gehäuse (64) umgebenen Meßbecher (14), in dem ein Flügelrad gelagert ist, das mit einem Zählwerk (16) verbunden ist, wobei eine den Meßbecher (14), das Flügelrad (26) und das Zählwerk (16) aufweisende Einheit abnehmbar an dem Gehäuse (64) angebracht ist, dadurch **gekennzeichnet**, daß in dem Gehäuse (64) ein Einsatz (40) mit einer schrägen, auf den Meßbecher (14) zu weisenden, sich an den Einlaß (66) anschließenden Anströmfläche (44) angeordnet ist, gegen welchen der Meßbecher (14) sich dichtend abstützt.

2. Flügelradzähler nach Anspruch 1, dadurch gekennzeichnet, daß die schräge Anströmfläche (44) sich, von dem Einlaß (66) aus gesehen, bogenförmig in Drehrichtung des Flügelrads (26) erstreckt.

3. Flügelradzähler nach einem der vorhergehenden Ansprüche, dadurch gekennzeichnet, daß zwischen Meßbecher (14) und Anströmfläche (44) ein Anströmkanal (56) ausgebildet ist, der sich in Drehrichtung des Flügelrads (26) verjüngt.

4. Flügelradzähler nach einem der vorhergehenden Ansprüche, dadurch gekennzeichnet, daß eine Mehrzahl von Anströmöffnungen (26) in der der Anströmfläche (44) zugewandten Wandung des Meßbechers um den Umfang des Meßbechers verteilt sind.

5. Flügelradzähler nach einem der vorhergehenden Ansprüche, dadurch gekennzeichnet, daß die Wandung (18) des Meßbechers (14) zur Anströmfläche (44) hin konisch ausgebildet ist.

6. Flügelradzähler nach einem der vorhergehenden Ansprüche, dadurch gekennzeichnet, daß die Achsen der Anströmöffnungen (24) in der Wandung (18) des Meßbechers (14) sich tangential mit radialer Komponente zum Flügelrad (26) erstrecken.

7. Flügelradzähler nach einem der vorhergehenden Ansprüche, dadurch gekennzeichnet, daß die Wandung (18) des Meßbechers (14) über eine ringförmige Dichtung, die sich an einer unteren Stirnfläche (32) des Meßbechers (14) erstreckt, gegen den Einsatz (40) radial innerhalb der Anströmfläche (44) abgestützt ist.

8. Flügelradzähler nach einem der vorhergehenden Ansprüche, dadurch gekennzeichnet, daß eine Stirnfläche (32) des im wesentlichen topfförmigen Meßbechers (14) mindestens eine Auslaßöffnung (30) aufweist, die über einen Auslaßkanal (60) mit dem Auslaß (68) verbunden ist, wobei die mindestens eine Auslaßöffnung (30) radial innerhalb der Anströmfläche (44) angeordnet ist und der Auslaßkanal (60) sich durch eine Durchtrittsausnehmung (62) in dem Einsatz (40) erstreckt.

9. Flügelradzähler nach einem der vorhergehenden Ansprüche, dadurch gekennzeichnet, daß der Einsatz (40) eine an seinem Außenumfang umlaufende Dichtung (63) aufweist, die sich gegen das Gehäuse (64) abstützt.

10. Flügelradzähler nach einem der vorhergehenden Ansprüche, dadurch gekennzeichnet, daß die Anströmfläche (44) des Einsatzes (40) sich in einem ersten Bereich (50) schräg nach oben zum Meßbecher (14) hin erstreckt und in einem zweiten Bereich (52) im wesentlichen waagerecht verläuft.

## Claims

1. Impeller flow meter having a housing (64), in which an inlet (66) and an outlet (68) are formed, a measuring cup, which is surrounded by the housing (64) and in which an impeller is mounted, which is connected to a counter (16), wherein a unit comprising the measuring cup (14), the impeller (26) and the counter (16) is removably positioned at the housing (64), **characterized** in that an insert (40) with an inclined flow impinging area (44) facing the measuring cup (14) and following the inlet (66) is positioned in the housing (64), the measuring cup (14) supporting itself sealingly against the insert.

2. Impeller flow meter according to claim 1, characterized in that the inclined flow impinging area (44) extends in a bow in the sense of rotation of the impeller (26), seen from the inlet (66).

3. Impeller flow meter according to one of the preceding claims, characterized in that a flow impinging channel (56), which is tapered in the sense of rotation of the impeller (26), is formed between measuring cup (14) and flow impinging area (44) .

4. Impeller flow meter according to one of the preceding claims, characterized in that a number of flow impinging openings (24) is distributed around the periphery of the measuring cup in the wall of the measuring cup facing the flow impinging area (44).

5. Impeller flow meter according to one of the preceding claims, characterized in that the wall (18) of the measuring cup (14) is formed conically to the flow impinging area (44).

6. Impeller flow meter according to one of the preceding claims, characterized in that the axes of the flow impinging openings (24) in the wall (18) of the measuring cup (14) extend tangentially with a radial component to the impeller (26).

7. Impeller flow meter according to one of the preceding claims, characterized in that the wall (18) of the measuring cup (14) is supported radially against the insert (40) within the flow impinging area (44) via a ring-shaped seal, which extends at a lower front face (32) of the measuring cup (14).

8. Impeller flow meter according to one of the preceding claims, characterized in that a front face (32) of the essentially pot-shaped measuring cup (14) comprises at least one outlet opening (30), which is connected to the outlet (68) via an outlet channel (60), the at least one outlet opening (30) being radially positioned within the flow impinging area (44) and the outlet channel (60) extending through a passage (62) in the insert (40).

9. Impeller flow meter according to one of the preceding claims, characterized in that the insert (40) comprises a seal (63), which runs round its external periphery and supports itself against the housing (64).

10. Impeller flow meter according to one of the preceding claims, characterized in that the flow impinging area (44) of the insert (40) extends in a first portion (50) inclined to the top to the measuring cup (14) and runs essentially horizontally in a second portion (52).

## Revendications

1. Compteur à roue à ailettes, comprenant un corps (64) dans lequel sont formées une entrée (66) et une sortie (68), comprenant un godet de mesure (14) entouré par le corps (64) et dans lequel est montée une roue à ailettes qui est elle-même reliée à un mécanisme compteur (16), le sous-ensemble comportant le godet de mesure (14), la roue à ailettes (26) et le mécanisme de comptage (16) étant monté de façon amovible sur le corps (64), caractérisé en ce que, dans le corps (64) est disposé un insert (40) possédant une surface oblique (44) d'arrivée du courant, dirigée vers le godet de mesure (14), et faisant suite à l'entrée (66), le godet de mesure (14) s'appuyant de façon étanche contre ledit insert.

2. Compteur à roue à ailettes selon la revendication 1, caractérisé en ce qu'à partir de l'entrée (66), la surface oblique (44) d'arrivée du courant s'étend en arc dans le sens de la rotation de la roue à ailettes (26).

3. Compteur à roue à ailettes selon l'une des revendications précédentes, caractérisé en ce qu'entre le godet de mesure (14) et la surface (44) d'arrivée du courant, est formé un canal d'arrivée (56) qui reçoit le courant et qui se rétrécit dans le sens de la rotation de la roue à ailettes (26).

4. Compteur à roue à ailettes selon l'une des revendications précédentes, caractérisé en ce que plusieurs ouvertures (24) d'arrivée du courant sont ménagées dans la paroi du godet de mesure qui est dirigée vers la surface (44) d'arrivée du courant, et sont réparties sur la circonférence du godet de mesure.

5. Compteur à roue à ailettes selon l'une des revendications précédentes, caractérisé en ce que la paroi (18) du godet de mesure (14) est de forme conique et se rétrécit en direction de la surface (44) d'arrivée du courant.

6. Compteur à roue à ailettes selon l'une des revendications précédentes, caractérisé en ce que les axes des ouvertures (24) d'arrivée du courant prévues dans la paroi (18) du godet de mesure (14) s'étendent tangentiellement à la roue à ailettes (26), avec une composante radiale.

7. Compteur à roue à ailettes selon l'une des revendications précédentes, caractérisé en ce que la paroi (18) du godet de mesure (14) prend appui contre l'insert (40), radialement à l'intérieur de la surface (44) d'arrivée du courant, avec interposition d'une garniture d'étanchéité annulaire qui s'étend le long d'une surface frontale intérieure (32) du godet de mesure (14).

8. Compteur à roue à ailettes selon l'une des revendications précédentes, caractérisé en ce qu'une surface frontale (32) du godet de mesure (14) sensiblement en forme de pot présente au moins une ouverture de sortie (30) qui est reliée à la sortie (68) par un canal de sortie (60), la au moins une ouverture de sortie (30) étant disposée radialement à l'intérieur de la surface (44) d'arrivée du courant, et le canal de sortie (60) s'étendant à travers un évidement traversant (62) de l'insert (40).

9. Compteur à roue à ailettes selon l'une des revendications précédentes, caractérisé en ce que l'insert (40) présente une garniture d'étanchéité (63) s'étendant sur sa circonférence extérieure et qui prend appui contre le corps (64).

10. Compteur à roue à ailettes selon l'une des revendications précédentes, caractérisé en ce que la surface d'arrivée de courant (44) de l'insert (40) s'étend obliquement vers le haut, en direction du godet de mesure (14) dans une première région (50) et s'étend sensiblement horizontalement dans une deuxième région (52).
